# EUROPÄISCHE PATENTSCHRIFT

(11) **EP 2 523 327 B1**
(45) Veröffentlichungstag und Bekanntmachung des Hinweises auf die Patenterteilung: **20.03.2019**
(21) Anmeldenummer: 11165629.4
(22) Anmeldetag: 11.05.2011
(51) Int. Cl.: H02M 1/44, H02M 1/32, H02H 7/125

(54) **FREQUENZUMRICHTER MIT ÜBERSPANNUNGSSCHUTZ UND VERFAHREN ZUM BETREIBEN DES FREQUENZUMRICHTERS**
FREQUENCY INVERTER WITH EXCESS VOLTAGE PROTECTION AND METHOD FOR OPERATING SAME
CONVERTISSEUR DE FRÉQUENCE DOTÉ D'UNE PROTECTION CONTRE LES SURTENSIONS ET PROCÉDÉ DE FONCTIONNEMENT DE CELUI-CI

(43) Veröffentlichungstag der Anmeldung: 14.11.2012
(73) Patentinhaber: Siemens Aktiengesellschaft, 80333 München (DE)
(72) Erfinder: Dillig, Reinhold, 96117 Memmelsdorf (DE); Herrmann, Bernd, 91074 Herzogenaurach (DE); Lorz, Roland, 91341 Röttenbach (DE); Roppelt, Bernd, 96191 Viereth-Trunstadt (DE); Schierling, Hubert, 91052 Erlangen (DE); Schwinn, Thomas, 91074 Herzogenaurach (DE)

(56) Entgegenhaltungen:
- JP-A- 2002 044 953
- US-A- 5 513 090
- AKAGI H: "Active filters and energy storage systems for power conditiong in japan", POWER ELECTRONICS SYSTEMS AND APPLICATIONS, 2004. PROCEEDINGS. 2004 FI RST INTERNATIONAL CONFERENCE ON HONG KONG 9-11 NOV. 2004, PISCATAWAY, NJ, USA,IEEE, 9. November 2004 (2004-11-09), Seiten 80-88, XP010796233, ISBN: 978-962-367-434-8
- BLAABJERG F ET AL: "Control and Testing of a Dynamic Voltage Restorer (DVR) at Medium Voltage Level", IEEE TRANSACTIONS ON POWER ELECTRONICS, IEEE SERVICE CENTER, PISCATAWAY, NJ, US, Bd. 19, Nr. 3, 1. Mai 2004 (2004-05-01), Seiten 806-813, XP011112310, ISSN: 0885-8993, DOI: 10.1109/TPEL.2004.833453

## Beschreibung

Die Erfindung betrifft einen Frequenzumrichter zum Betreiben einer elektrischen Maschine an einem Wechselspannungs-Versorgungsnetz. Bei dem Frequenzumrichter ist ein Einspeise-Gleichrichter mit einem Netzanschluss über eine Drosselspule gekoppelt. Ein Frequenzumrichter mit einem Einspeise-Gleichrichter ist aus der DE 197 39 553 A1 bekannt. Drosselspulen sind einem Einspeise-Gleichrichter regelmäßig als Netzfilter oder zum Bereitstellen einer Kommutierungsinduktivität netzseitig vorgeschaltet.

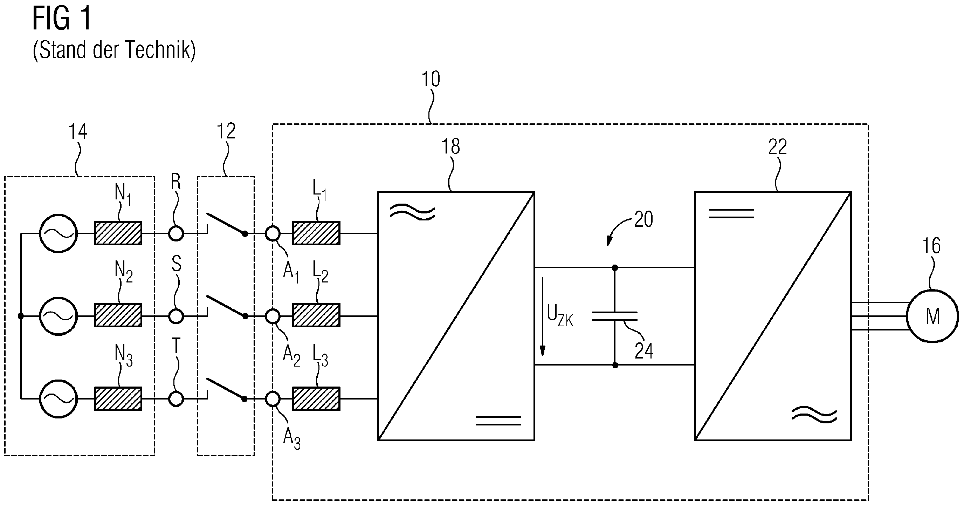

Die prinzipielle Funktionsweise eines Frequenzumrichters ist im Folgenden anhand des in FIG 1 gezeigten Blockschaltbildes näher erläutert. Der gezeigte Frequenzumrichter 10 ist mit Netzanschlüssen A₁, A₂, A₃ an ein Hauptschütz 12 angeschlossen, über welches die Netzanschlüsse A₁, A₂, A₃ mit Netzphasenleitern R, S, T eines Wechselspannungs-Versorgungsnetzes, oder kurz eines Netzes 14, verbunden werden können. An den Frequenzumrichter 10 ist eine elektrische Maschine 16 angeschlossen. Für einen Betrieb der elektrischen Maschine 16 kann mittels des Frequenzumrichters 10 aus der Wechselspannung des Netzes 14, die eine fest vorgegebene Frequenz, z.B. 50 Hz oder 60 Hz, aufweist, für die elektrische Maschine 16 eine Wechselspannung mit einstellbarer Frequenz erzeugt werden.

Dazu weist der Frequenzumrichter 10 einen Einspeise-Gleichrichter 18 auf, der die Netz-Wechselspannung in eine gleichgerichtete Spannung, hier als Gleichspannung U_{ZK} bezeichnet, umwandelt. Diese wird in einem Gleichspannungs-Zwischenkreis, oder kurz Zwischenkreis 20, bereitgestellt. Ein Wechselrichter 22 erzeugt dann aus der Gleichspannung U_{ZK} die Wechselspannung für die elektrische Maschine 16.

In dem Zwischenkreis 20 ist durch zumindest einen Zwischenkreiskondensator 24 eine Zwischenkreiskapazität bereitgestellt, durch welche die Gleichspannung U_{ZK} geglättet wird. Unter einer Zwischenkreiskapazität wird hier eine elektrische Kapazität verstanden, die groß genug ist, um eine bei der beschriebenen Wandlung durch den Einspeise-Gleichrichter 18 erzeugte Welligkeit der Gleichspannung U_{ZK} so weit zu glätten, dass sie den zweiten Wandlungsschritt nicht beeinflusst. Bevorzugt ist die Zwischenkreiskapazität auch groß genug, um bei einem kurzzeitigen Ausfall der Netz-Wechselspannung für einige Millisekunden einen unterbrechungsfreien Betrieb der elektrischen Maschine zu ermöglichen.

Dem Einspeise-Gleichrichter 18 sind netzseitig Drosseln L₁, L₂, L₃ vorgeschaltet. Diese verhindern, dass von dem Einspeise-Gleichrichter 18 bei der Spannungswandlung erzeugte Störsignale als Oberwellen in das Netz 14 übertragen werden. Mit anderen Worten bilden die Drosseln L₁, L₂, L₃ Filter für eine Entstörung. Die Drosseln L₁, L₂, L₃ können eine weitere Funktion haben, wenn der Einspeise-Gleichrichter 18 als Hochsetzsteller betrieben wird, der eine Gleichspannung U_{ZK} mit einem Effektivwert erzeugt, der unabhängig von einem Effektivwert der Netzspannung ist. Die Drosseln L₁, L₂, L₃ sind dann als Kommutierungsinduktivitäten ausgelegt, die verhindern, dass in einem getakteten Betrieb des Einspeise-Gleichrichters 18 erzeugte Kurzschlüsse zwischen den einzelnen Netzphasenleitern R, S, T im Einspeise-Gleichrichter 18 zu einem Kommutierungsstrom mit einer kritischen Stromstärke führen.

Bei einem Frequenzumrichter der beschriebenen Art gibt es das Problem, dass durch die Drosseln L₁, L₂, L₃ und durch Netzinduktivitäten N₁, N₂, N₃ eine sehr große Spannung induziert wird, wenn ein aus den Netz 14 in den Einspeise-Gleichrichter 18 fließender Strom abrupt unterbrochen wird. Grund dafür ist, dass die Spulen der Drosseln L₁, L₂, L₃ die in ihnen gespeicherte magnetische Energie nach dem Prinzip der Induktion in elektrische Energie umwandeln, die dann an den Einspeise-Gleichrichter 18 in Form eines hohen Spannungspulses abgegeben wird. Durch diese Induktionsspannung können Komponenten des Einspeise-Gleichrichters 18, des Zwischenkreises 20 oder des Wechselrichters 22 beschädigt werden.

In einem Fachartikel von Akagi (Akagi H., "Active filters and energy storage systems for power conditioning in Japan", power electronics systems and applications, 2004. Proceedings, Piscataway, NJ, USA, IEEE, November 2004, Seiten 80-88, ISBN: 978-962-367-434-8) ist ein Gleichrichtersystem beschrieben, bei welchem Oberwellen besonders gering gehalten werden. Hierzu wird einem Diodengleichrichter netzseitig ein Transformator vorgeschaltet, über welchen eine Spannung aus den einzelnen Phasen des Wechselspannungsnetzes ausgekoppelt und einem aktiven Gleichrichter zugeführt wird. Der aktive Gleichrichter kann hierdurch Oberwellen transformatorisch auskoppeln.

In dem Dokument JP 2002 044 953 A ist eine Einspeiseeinheit für einen Gleichspannungszwischenkreis beschrieben, bei welcher zwei Gleichrichter parallel in den Gleichspannungs-Zwischenkreis einspeisen. Der erste Gleichrichter ist direkt mit dem Wechselspannungs-Versorgungsnetz gekoppelt, der zweite Gleichrichter über einen Transformator.

In dem Dokument US 5 513 090 A ist eine Kombination aus einem aktiven und einem passiven Filter zum Glätten von Oberwellen in einer Wechselspannungs-Versorgungsleitung beschrieben. Das passive Filter besteht aus Sternschaltungen von mehreren passiven Bauelementen. Das aktive Filter besteht aus einem steuerbaren Gleichrichter, der transformatorisch mit den Phasen der Wechselspannungs-Versorgungsleitung gekoppelt ist.

In einem Fachartikel von Blaabjerg et al. (Blaabjerg F. et al., "Control and testing of a dynamic voltage restorer (DVR) at medium voltage level", IEEE Transactions on Power Electronics, IEEE Service Center, Piscataway, NJ, US, Bd. 19, Nr. 3, 1. Mai 2004, Seiten 806-813, ISSN: 0885-8993, DOI:10.1109/TPEL.2004.833453) ist ein aktives System zum Glätten von Spannungseinbrüchen in einer Wechselspannungs-Versorgungsleitung beschrieben. Bei einem Spannungseinbruch wird über aktive Wechselrichter aus einem Energiespeicher die fehlende Spannung transformatorisch in die Versorgungsleitungen eingekoppelt. Hierdurch wird eine elektrische Last, die empfindlich auf Spannungseinbrüche reagiert, vor einer Notabschaltung bewahrt.

Es ist Aufgabe der vorliegenden Erfindung, für einen Frequenzumrichter der genannten Art einen Schutz vor einer Überspannung bereitzustellen.

Die Aufgabe wird durch einen Frequenzumrichter gemäß Patentanspruch 1 und einen Frequenzumrichter gemäß Patentanspruch 6 sowie durch ein Verfahren gemäß Patentanspruch 11 gelöst. Vorteilhafte Weiterbildungen des erfindungsgemäßen Frequenzumrichters und des erfindungsgemäßen Verfahrens sind durch die Unteransprüche gegeben.

Bei dem erfindungsgemäßen Frequenzumrichter ist eine Netzanschlusseinrichtung über eine Drosselspule mit einem Einspeise-Gleichrichter gekoppelt. Durch die Drosselspule kann ein Filter gebildet oder eine Kommutierungsinduktivität bereitgestellt sein, wie es beides bereits beschrieben wurde. Entsprechend ist ein erster Anschluss der Drosselspule mit der Netzanschlusseinrichtung und ein zweiter Anschluss der Drosselspule mit dem Einspeise-Gleichrichter verschaltet.

Bei dem erfindungsgemäßen Frequenzumrichter ist die Drosselspule durch eine primärseitige Wicklung eines Transformators gebildet. Sie ist somit transformatorisch, d.h. induktiv, mit einer sekundärseitigen Wicklung des Transformators gekoppelt. Diese sekundärseitige Wicklung ist dabei eine separate Spule, die mit einem weiteren Gleichrichter verschaltet ist.

Bei einem Betrieb des Einspeise-Gleichrichters mit einem Strom aus dem Versorgungsnetz ist durch die transformatorische Kopplung folgendes erfindungsgemäße Verfahren ermöglicht: Falls eine Unterbrechung des Stromes erkannt wird, wird die in der Drosselspule gespeicherte Energie über die sekundärseitige Wicklung abgeführt.

Der erfindungsgemäße Frequenzumrichter und das erfindungsgemäße Verfahren weisen den Vorteil auf, dass bei einer Unterbrechung des Stromflusses der Spannungswert der von der Drosselspule in dem Einspeise-Gleichrichter induzierten Spannung so klein ist, dass weder dieser noch andere Bauteile oder Komponenten beschädigt werden. Durch den weiteren Gleichrichter kann hierbei eine über die transformatorische Kopplung in die sekundärseitige Wicklung induzierte Spannung in eine Spannung mit vorbestimmter Polarität umgewandelt werden. Dadurch ergibt sich der Vorteil, dass die aus der Drosselspule abgeführte Energie für eine weitere Verwendung nutzbar gemacht werden kann.

Unter dem hier als Einspeise-Gleichrichter bezeichneten Element ist im Zusammenhang mit der Erfindung auch ein steuerbarer Umrichter zu verstehen, der (beispielsweise bei einem vorübergehenden generatorischen Betrieb einer angeschlossenen elektrischen Maschine) elektrische Energie auch umgekehrt aus einem Gleichspannungs-Zwischenkreis in das Netz einspeisen, der also auch als Wechselrichter betrieben werden kann.

In dem Zwischenkreis ist ein Anschluss eines Zwischenkreiskondensators über mindestens einen Schalter mit einem Gleichspannungs-Ausgang des Einspeise-Gleichrichters verschaltet. Eine zugehörige vorteilhafte Weiterbildung des erfindungsgemäßen Verfahrens ergibt sich, indem eine Stromstärke eines durch den Frequenzumrichter fließenden Stromes überwacht wird und, falls die Stromstärke größer als ein vorbestimmter Schwellenwert ist, der Zwischenkreis-Schalter geöffnet wird.

So kann, beispielsweise bei einem Kurzschluss in der elektrischen Maschine oder im Wechselrichter, der Zwischenkreis abgeschaltet und der Kurzschlussstrom unterbrochen werden.

Hierdurch wird der Einspeise-Gleichrichter vor einer Beschädigung durch den Kurzschlussstrom geschützt. Mittels des Schalters kann zusätzlich sichergestellt werden, dass beim Schließen des Hauptschützes zunächst kein Ladestrom von dem Einspeise-Gleichrichter in den Zwischenkreiskondensator fließt. Bei entladenem Zwischenkreiskondensator kann ein solcher anfänglicher Ladestrom eine derart große Stromstärke aufweisen, dass (ähnlich wie bei einem Kurzschluss) Bauteile des Einspeise-Gleichrichters beschädigt werden. Durch den Schalter ist es möglich, eine beliebig große Zwischenkreiskapazität bereitzustellen, die dann durch entsprechendes Ansteuern des Schalters mit einem geeigneten Steuersignal kontrolliert aufgeladen werden kann.

Bei einer Ausführungsform des erfindungsgemäßen Frequenzumrichters kann mittels eines Schaltelements erreicht werden, dass ein Strom durch die sekundärseitige Wicklung wahlweise, d.h. in Abhängigkeit von einem Steuersignal, blockiert wird. Dadurch ergibt sich der Vorteil, dass während eines normalen Betriebes des Frequenzumrichters keine elektrische Leistung von der Drosselspule in die sekundärseitige Wicklung übertragen wird. Um dennoch den beschriebenen Überspannungsschutz zu gewährleisten wird gemäß einer entsprechenden Weiterbildung des erfindungsgemäßen Verfahrens das Schaltelement bei Erkennen der Unterbrechung des Stromflusses geschlossen. Durch den dann in der sekundärseitigen Wicklung ermöglichten Strom kann die Energie aus der Drosselspule über die sekundärseitige Wicklung abgeführt werden.

Gemäß einer Ausführungsform des erfindungsgemäßen Frequenzumrichters ist ein durch die sekundärseitige Wicklung fließender Strom durch ein Widerstandselement führbar. Dann kann die aus der Drosselspule abgeführte Energie sicher in thermische Energie, sprich Wärme, umgewandelt werden. Die sekundärseitige Wicklung kann dabei auch mit dem Widerstandselement verschaltet sein, ohne dass ein weiterer Gleichrichter bereitgestellt ist. In diesem Fall ist die sekundärseitige Wicklung dann stets auch mit einem Schaltelement verschaltet, so dass ein Strom aus der sekundärseitigen Wicklung in das Widerstandselement mittels des Schaltelements wie beschrieben wahlweise blockiert werden kann.

Die sekundärseitige Wicklung kann (über den weiteren Gleichrichter) mit einem Zwischenkreiskondensator des Zwischenkreises verschaltet sein. Dort kann die abgeführte Energie dann gespeichert werden. Durch die Verschaltung mit dem Zwischenkreis ist durch dessen verhältnismäßig große Kapazität in vorteilhafter Weise verhindert, dass eine in der sekundärseitigen Wicklung induzierte Spannung einen großen Spannungswert erreicht und hierdurch Bauelemente der sekundärseitigen Schaltung beschädigt werden. Hierzu ist auch eine Weiterbildung des erfindungsgemäßen Verfahrens beansprucht, gemäß welcher die abgeführte Energie dem Zwischenkreiskondensator zugeführt wird.

Gemäß einer anderen vorteilhaften Weiterbildung ist die sekundärseitige Wicklung mit einem Spannungswandler verschaltet. Ein solcher Spannungswandler kann ein AC-DC-Wandler oder ein (dem weiteren Gleichrichter nachgeschalteter) DC-DC-Wandler sein. Durch den Spannungswandler wird es in vorteilhafter Weise ermöglicht, eine Windungsanzahl der sekundärseitigen Wicklung unabhängig von der Art zu wählen, in welcher die abgeführte Energie weiter genutzt wird. Somit kann die Windungsanzahl in einer optimalen Weise an die benötigte transformatorische Kopplung zwischen der Drosselspule und der sekundärseitigen Wicklung angepasst sein. Falls sich dadurch ein Spannungswert der in der sekundärseitigen Wicklung induzierten Spannung ergibt, der für die weitere Nutzung der abgeführten Energie ungünstig ist, kann die induzierte Spannung mittels des Spannungswandlers umgewandelt werden.

Bei dem erfindungsgemäßen Frequenzumrichter können auch mehrere Drosselspulen bereitgestellt sein. Bevorzugt ist zu jedem Anschluss an einen Netzphasenleiter zumindest eine davon bereitgestellt. Mit anderen Worten kann die Netzanschlusseinrichtung mehrphasig sein, wobei zumindest zwei der Phasen über jeweils eine Drosselspule mit dem Einspeise-Gleichrichter gekoppelt sind. Hierdurch ergibt sich für jede Phase ein Überspannungsschutz.

In diesem Zusammenhang sind bei einer Ausführungsform des erfindungsgemäßen Frequenzumrichters zumindest zwei der Drosselspulen in einem gemeinsamen Transformator angeordnet. Dies hat zur Folge, dass sich die von den einzelnen Drosselspulen erzeugten Magnetfelder in einem magnetischen Kreis des Transformators überlagern und so teilweise aufheben. Hierdurch ergibt sich der Vorteil, dass ein größerer Stromfluss durch die Drosselspulen möglich ist, ohne dass eine magnetische Sättigung eines magnetischen Materials des Transformators eintritt. Eine bevorzugte Bauform ist hier ein mehrschenkliger Transformator.

In einer nicht gesondert beanspruchten Ausführungsform umfasst der Schalter des Zwischenkreises einen Halbleiterschalter, insbesondere einen SiC-MOSFET (SiC - Siliziumcarbid; MOS - Metall-Oxid-Halbleiter; FET - Feldeffekttransistor) oder einen SiC-JFET (JFET - Sperrschicht-FET, Junction-FET) oder einen auf Silizium basierenden Transistor (Si-Transistor; Si - Silizium).

Mittels eines Halbleiterschalters ist es möglich, einen Überstrom im Zwischenkreis schnell genug zu unterbrechen, bevor Bauteile des Einspeise-Gleichrichters thermisch zerstört werden. Das beschriebene Hauptschütz ist hierzu zu langsam. Zum Aufladen des zumindest einen Zwischenkreiskondensators kann der Halbleiterschalter getaktet angesteuert werden. Er kann auch als gesteuerter Ladewiderstand für den zumindest einen Zwischenkreiskondensator betrieben werden.

SiC-basierte Transistoren sind sehr hitzebeständig, so dass mittels des Frequenzumrichters auch elektrische Maschinen mit einer großen elektrischen Leistung, beispielsweise über 10 kW, betrieben werden können, ohne dass der über den Zwischenkreis fließende entsprechend große Strom den Transistor beschädigt. Ein Frequenzumrichter mit einem Si-Transistor ist kostengünstiger herstellbar als einer mit einem Transistor auf der Basis von SiC.

Bevorzugt ist der Halbleiterschalter selbstsperrend, d.h. bei einer Steuerspannung in einem Bereich um 0V herum befindet er sich in einem sperrenden Zustand. Dadurch ist in vorteilhafter Weise verhindert, dass bei einem Ausfall der Steuereinrichtung zum Steuern des Halbleiterschalters ein unkontrollierter Strom in dem Zwischenkreis fließt.

Der Halbleiterschalter muss nicht aus einem einzigen Bauteil bestehen. Er kann auch eine Kaskodenschaltung aus einem MOSFET und einem JFET umfassen. Dann ergibt sich der Vorteil, dass in dem Zwischenkreis des Frequenzumrichters ein selbstsperrender Halbleiterschalter bereitgestellt ist, bei dem eine Sperrschicht des MOSFET gegen eine Beschädigung durch eine Überspannung geschützt ist. Der JFET ist bevorzugt auf der Grundlage von SiC gefertigt.

Zusätzlich zu einem Zwischenkreiskondensator kann in dem Zwischenkreis an einem Gleichspannungs-Ausgang des Einspeise-Gleichrichters zumindest ein Kommutierungskondensator bereitgestellt sein, durch den bzw. durch die eine Kommutierungskapazität für den Einspeise-Gleichrichter bereitgestellt ist.

Mit einer Kommutierungskapazität ist hier eine Kapazität gemeint, deren Wert wesentlich kleiner als der Kapazitätswert des Zwischenkreiskondensators ist. Bevorzugt beträgt die Kommutierungskapazität weniger zehn Prozent, insbesondere weniger als ein Prozent, der Zwischenkreiskapazität. Ein Betrag der Kommutierungskapazität kann auch in Abhängigkeit von einem Induktivitätswert der Drosselspulen und/oder einer Induktivität des Netzes, an das der Frequenzumrichter angeschlossen ist, gewählt sein. Mittels der Kommutierungskapazität kann erreicht werden, dass die beim Schalten von Komponenten des Einspeise-Gleichrichters an den Drosselspulen bzw. der Netzinduktivität entstehende Induktionsspannung stets unterhalb eines für die Funktionstüchtigkeit des Frequenzumrichters kritischen Spannungswertes bleibt. Indem die Kommutierungskapazität sehr viel kleiner als die Zwischenkreiskondensator-Kapazität gewählt ist, ist sichergestellt, dass durch einen Ladestrom des Kommutierungskondensators der Einspeise-Gleichrichter beim Schließen des Hauptschützes nicht beschädigt wird.

Die Erfindung wird im Folgenden anhand von Ausführungsbeispielen näher erläutert. Dazu zeigt:
- FIG 1: eine schematische Darstellung eines an einem elektrischen Versorgungsnetz angeschlossenen Frequenzumrichters gemäß dem Stand der Technik,
- FIG 2: eine schematische Darstellung eines Frequenzumrichters gemäß einer Ausführungsform des erfindungsgemäßen Frequenzumrichters,
- FIG 3: eine schematische Darstellung eines Frequenzumrichters gemäß einer weiteren Ausführungsform des erfindungsgemäßen Frequenzumrichters,
- FIG 4: eine schematische Darstellung von drei Drosselspulen, die Bestandteil ein und desselben Transformators sind, der in einer weiteren Ausführungsform des erfindungsgemäßen Frequenzumrichters eingebaut ist, und
- FIG 5: eine schematische Darstellung eines Frequenzumrichters gemäß einer weiteren Ausführungsform des erfindungsgemäßen Frequenzumrichters.

Die Beispiele stellen bevorzugte Ausführungsformen der Erfindung dar.

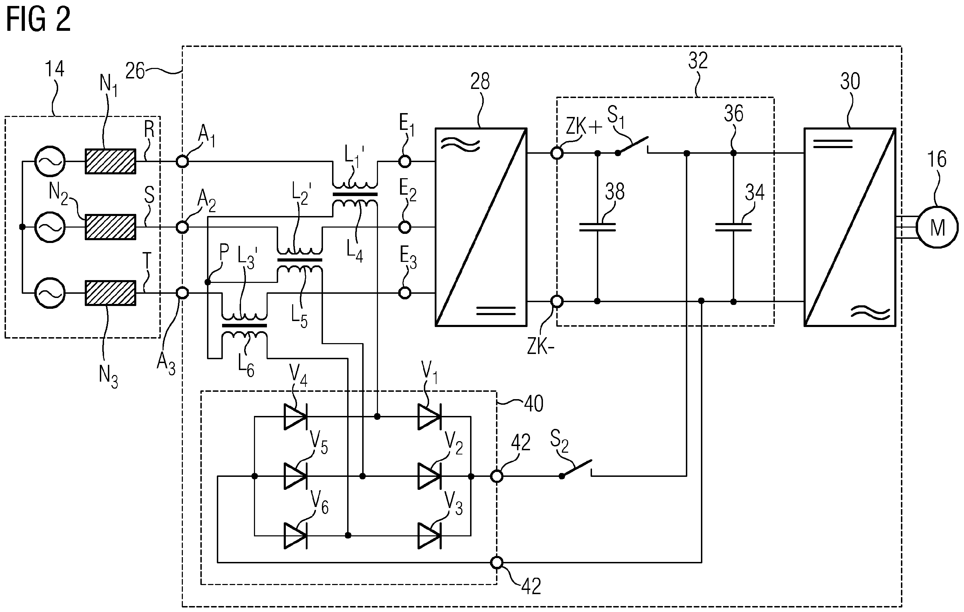

In FIG 2 ist ein Frequenzumrichter 26 gezeigt, über den eine elektrische Maschine 16 mit einem Netz 14 gekoppelt ist. Die elektrische Maschine 16 und das Netz 14 entsprechen den in FIG 1 gezeigten Elementen mit denselben Bezugszeichen.

Der Frequenzumrichter 26 weist einen Einspeise-Gleichrichter 28, einen Wechselrichter 30 und einen den Einspeise-Gleichrichter 28 mit dem Wechselrichter 30 verbindenden Zwischenkreis 32 auf. Der Einspeise-Gleichrichter 28 ist ein steuerbarer Umrichter, der auch als Wechselrichter betreibbar ist. Der Wechselrichter 30 ist auch als Gleichrichter betreibbar, so dass beispielsweise zum Abbremsen eines Rotors der elektrischen Maschine 16 eine dabei erzeugte elektrische Energie in den Zwischenkreis 32 und von dort (über den Einspeise-Gleichrichter 28 im Wechselrichterbetrieb) ins Netz 14 übertragen werden kann.

In dem Zwischenkreis 32 befindet sich ein Zwischenkreiskondensator 34. Seine Kapazität kann in dem gezeigten Beispiel größer als 1 mF sein. Zwischen dem Einspeise-Gleichrichter 28 und einem Anschluss 36 des Zwischenkreiskondensators 34 befindet sich ein Schalter S₁.

Mittels des Schalters S₁ kann ein Strom unterbrochen werden, der von dem Einspeise-Gleichrichter 28 zum Zwischenkreiskondensator 34 oder zum Wechselrichter 30 fließt. Der Schalter S₁ kann ein SiC-MOSFET oder eine Kaskodenschaltung mit einem Si-MOSFET und einem SiC-JFET sein.

Ein Kommutierungskondensator 38 des Zwischenkreises 32 ist dauerhaft mit Anschlüssen ZK+ und ZK- eines Gleichspannungs-Ausgangs des Einspeise-Gleichrichters 28 elektrisch verbunden. Der Kommutierungskondensator 38 kann ein Keramik- oder Folienkondensator sein. Die Kapazität des Kommutierungskondensators 38 (d.h. Kommutierungskapazität), ist in diesem Beispiel kleiner als 5 µF. Bevorzugt beträgt sie mehrere 100 nF bis 1000 nF. Sie ist aber im Allgemeinen in Abhängigkeit von einer über den Frequenzumrichter 26 leitbaren Gesamtleistung gewählt, wobei sie zudem bevorzugt weniger als zehn Prozent der Kapazität des Zwischenkreiskondensators 34 beträgt.

Wechselspannungs-Eingänge E₁, E₂, E₃ des Einspeise-Gleichrichters 28 sind über Drosselspulen L₁', L₂', L₃' mit Netzanschlüssen A₁, A₂, A₃ des Frequenzumrichters 26 verbunden. Die Netzanschlüsse A₁, A₂, A₃ stellen Netzanschlusselemente dar. Mit ihnen kann der Frequenzumrichter 26 an Netzphasenleitern R, S, T des Netzes 14 angeschlossen werden. Ein Hauptschütz, das dem Hauptschütz 12 von FIG 1 entspricht und das dem Frequenzumrichter 26 vorgeschaltet ist, ist in FIG 2 der Übersichtlichkeit halber nicht dargestellt.

Die Drosselspulen L₁', L₂', L₃' sind Primärwicklungen eines Transformators, wie in FIG 2 durch die entsprechenden Schaltungssymbole angedeutet ist. Sekundärspulen L₄, L₅, L₆ des Transformators sind mit den zugehörigen Primärspulen über magnetisierbare Transformatorenkerne induktiv gekoppelt. Anstelle eines einzelnen Transformators können mehrere getrennte Transformatoren für die einzelnen Drosselspulen L₁', L₂', L₃' vorgesehen sein. Die Sekundärspulen L₄, L₅, L₆ sind einerseits in einem Sternpunkt P miteinander verschaltet. Andererseits sind sie an einen Gleichrichter 40 angeschlossen.

Der in dem Beispiel gezeigte Gleichrichter 40 ist ein Brückengleichrichter mit sechs Dioden V₁ bis V₆. Gleichspannungs-Anschlüsse 42 des Gleichrichters 40 sind hier mit dem Zwischenkreiskondensator 34 verschaltet. Bei geschlossenem Schalter S₂ lädt eine von dem Gleichrichter 40 an den Anschlüssen 42 erzeugte Gleichspannung den Zwischenkreiskondensator 34 auch dann auf, wenn der Schalter S₁ geöffnet ist.

Zwischen die Gleichspannungs-Anschlüsse 42 und den Zwischenkreiskondensator 34 kann ein Schalter S₂ in einer der beiden Leitungen eingebaut sein, wie dies auch bei dem gezeigten Beispiel für eine Plus-Leitung gezeigt ist. Durch Öffnen des Schalters S₂ kann ein Stromfluss durch die Sekundärspulen L₄, L₅, L₆ blockiert werden. Der Schalter S₂ kann als elektrischer oder elektromechanischer Schalter ausgeführt sein. Im Normalbetrieb, d.h. bei geschlossenem Schalter S₁, kann der Schalter S₂ geöffnet sein. Vor einem Öffnen des Schalters S₁ wird er dann geschlossen.

Beim Abschalten des Zwischenkreises 32 durch Öffnen des Schalters S₁ würde insbesondere dann, wenn während dessen ein großer Laststrom fließt, die Kapazität des Kommutierungskondensators 38 nicht ausreichen, um eine in den Drosselspulen L₁', L₂' , L₃' und in Netzinduktivitäten N₁, N₂, N₃ gespeicherte Energie zu übernehmen und hierdurch einen Betrag einer Induktionsspannung gering zu halten. Es würde eine Überspannung am Schalter S₁ entstehen, durch die Bauteile im Einspeise-Gleichrichter 28 und der Schalter S₁ zerstört werden könnten.

Durch die beschriebene transformatorische Kopplung wird die Energie der erwähnten Induktivitäten beim Abschalten des Zwischenkreises 32 über die Sekundärspulen L₄, L₅, L₆ abgeführt. Bei dem Frequenzumrichter 26 wird hierbei die in den Sekundärspulen L₄, L₅, L₆ induzierte Spannung durch den Gleichrichter 40 gleichgerichtet und in den Zwischenkreiskondensator 34 eingespeist. Dessen Kapazität ist so groß, dass hierbei keine Überspannung entsteht.

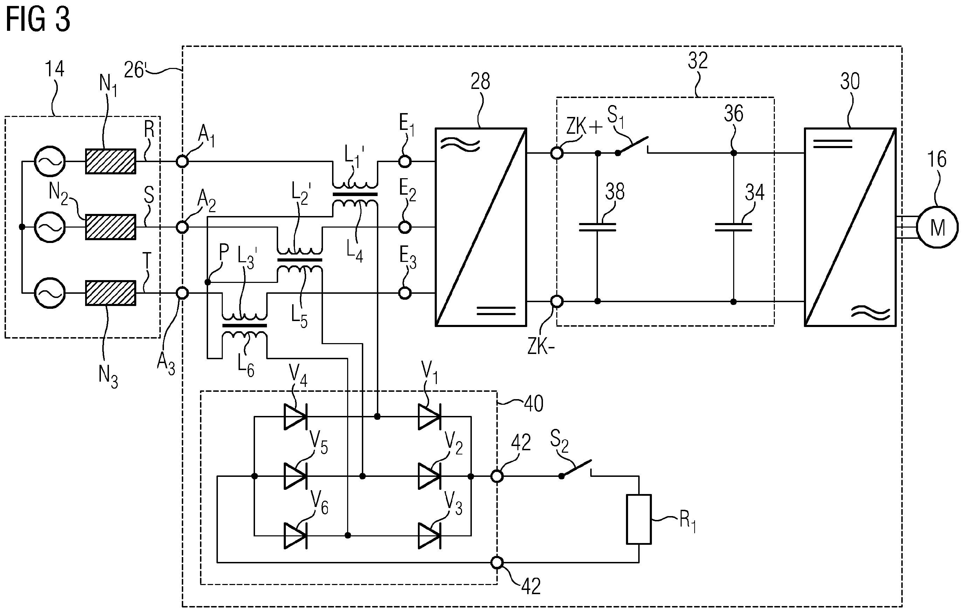

In FIG 3 ist ein Frequenzumrichter 26' gezeigt, dessen Aufbau größtenteils dem Frequenzumrichter 26 entspricht. Elemente, die in ihrer Funktionalität Elementen des Frequenzumrichters 26 entsprechen, sind in FIG 3 mit gleichen Bezugszeichen versehen wie in FIG 2. Im Folgenden sind nur diejenigen Elemente beschrieben, durch die sich die beiden Frequenzumrichter 26 und 26' unterscheiden.

Bei dem Frequenzumrichter 26' sind Sekundärspulen L₄, L₅, L₆ über einen Gleichrichter 40 mit einem Widerstand R₁ verschaltet. In dem Widerstand R₁ kann eine beim Abschalten des Zwischenkreises 26' aus dem Lastkreis abgeführte Energie in Wärme umgewandelt werden.

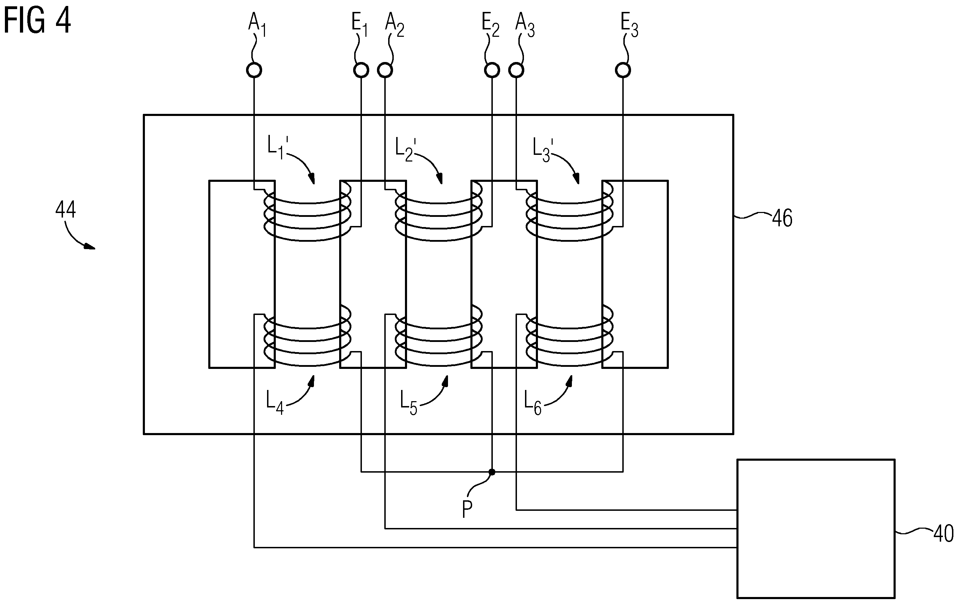

In FIG 4 ist eine 5-Schenkel-Drossel, kurz Drossel 44, gezeigt, wie sie beispielsweise in dem Frequenzumrichter 26 eingebaut sein kann. Aus diesem Grund sind in FIG 4 Elemente, die Elementen entsprechen, die in FIG 2 gezeigt sind, in FIG 4 mit gleichen Bezugszeichen versehen.

Bei der Drossel 44 sind Drosselspulen L₁', L₂', L₃' auf Schenkel eines magnetischen Kerns 46 aufgesteckt. Die Drosselspulen L₁', L₂', L₃' sind jeweils über einen Anschluss mit Netzanschlüssen A₁, A₂, A₃ des Frequenzumrichters verbunden. Ein jeweiliger zweiter Anschluss der Drosselspulen L₁', L₂', L₃' ist mit Wechselspannungs-Eingängen E₁, E₂, E₃ eines nicht weiter dargestellten Einspeise-Gleichrichters verbunden.

Die Drossel 44 ist als Transformator ausgestaltet. Sekundärspulen L₄, L₅, L₆ sind über einen jeweiligen Anschluss mit einem gemeinsamen Sternpunkt P verbunden. Ein jeweiliger zweiter Anschluss ist mit einem Gleichrichter 40 verbunden.

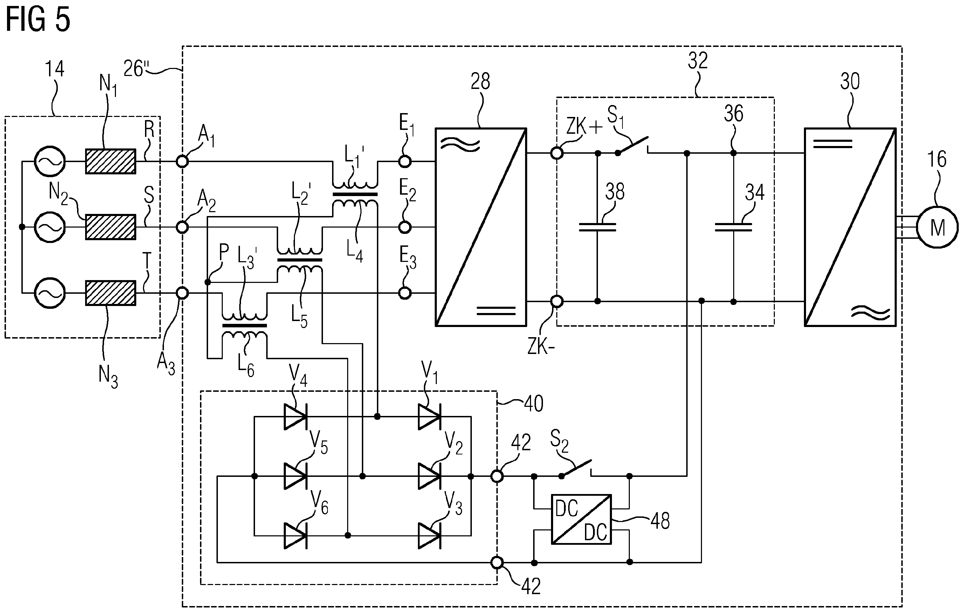

In FIG 5 ist ein Frequenzumrichter 26" gezeigt. Dieser weist einen sehr ähnlichen Aufbau wie der Frequenzumrichter 26 auf, weshalb in FIG 5 wieder gleiche Bezugszeichen wie in FIG 2 für funktional einander entsprechende Elemente verwendet sind.

Bei dem Frequenzumrichter 26" ist an den Gleichspannungs-Anschlüssen 42 eines Gleichrichters 40 ein DC-DC-Wandler 48 angeschlossen, mittels welchem eine von dem Gleichrichter 40 erzeugte gleichgerichtete Spannung umgewandelt werden kann. In dem gezeigten Beispiel wird durch die gewandelte Spannung ein Zwischenkreiskondensator 34 aufgeladen. Die gewandelte Spannung kann dabei einen Spannungswert aufweisen, der in Abhängigkeit von einem Typ des Zwischenkreiskondensators 34 oder von dessen aktuellen Ladezustand eingestellt ist.

Die von dem DC-DC-Wandler 48 erzeugte Spannung, oder allgemein eine von dem Gleichrichter 40 erzeugte Spannung, kann auch dazu verwendet werden, einen Notstrombetrieb einer Steuerschaltung zu ermöglichen, durch welche beispielsweise der Frequenzumrichter gesteuert wird.

Insgesamt ist durch die Beispiele gezeigt, wie bei Frequenzumrichtern die Energie in den Kommutierungsdrosseln bei einer Unterbrechung des Stromes über eine transformatorische Kopplung abgeführt und abgebaut werden kann. Hierbei wird die für die Kommutierung nötige und verhältnismäßig geringe Kommutierungskapazität durch den Kommutierungskondensator bereitgestellt. Eine für das Abschalten des Zwischenkreises nötige, große Kapazität muss nicht separat bereitgestellt werden. Stattdessen wird für die Haupt-Energieübernahme die transformatorische Kopplung bereitgestellt, um die Energie der Induktivitäten aus dem Lastkreis abzuführen. Die Kapazität des Kommutierungskondensators unterstützt hierbei noch die Energieübernahme.

## Patentansprüche

1. Frequenzumrichter (26,26',26"), der zum Betreiben einer elektrischen Maschine (16) an einem Wechselspannungs-Versorgungsnetz (14) ausgelegt ist und bei dem eine Netzanschlusseinrichtung (A₁,A₂,A₃) über eine Drosselspule (L₁', L₂',L₃') mit einem Einspeise-Gleichrichter (28) gekoppelt ist, wobei ein erster Anschluss der Drosselspule (L₁',L₂', L₃') mit der Netzanschlusseinrichtung (A₁,A₂,A₃) und ein zweiter Anschluss der Drosselspule (L₁',L₂',L₃') mit dem Einspeise-Gleichrichter (28) verschaltet ist, wobei die Drosselspule (L₁',L₂',L₃') durch eine primärseitige Wicklung (L₁',L₂',L₃') eines Transformators (44) bereitgestellt ist, so dass die Drosselspule (L₁',L₂',L₃') transformatorisch mit einer sekundärseitigen Wicklung (L₄,L₅,L₆) des Transformators (44) gekoppelt ist, die mit einem weiteren Gleichrichter (40) verschaltet ist, **dadurch gekennzeichnet, dass** in einem Zwischenkreis (32) ein Anschluss (36) eines Zwischenkreiskondensators (34) über einen Schalter (S₁) mit einem Gleichspannungs-Ausgang (ZK+) des Einspeise-Gleichrichters (28) verschaltet ist, und
dass der Frequenzumrichter (26,26',26") eingerichtet ist, bei Erkennen der Unterbrechung des Stromes durch den Schalter (S₁) die in der Drosselspule (L₁', L₂', L₃') gespeicherte Energie über die sekundärseitige Wicklung (L₄, L₅, L₆) abzuführen.

2. Frequenzumrichter (26,26',26") nach Anspruch 1, bei dem ein Strom durch die sekundärseitige Wicklung (L₄,L₅,L₆) mittels eines Schaltelements (S₂) wahlweise blockierbar ist.

3. Frequenzumrichter (26') nach Anspruch 1 oder 2, bei dem ein durch die sekundärseitige Wicklung (L₄,L₅,L₆) fließender Strom durch ein Widerstandselement (R₁) führbar ist.

4. Frequenzumrichter (26,26'') nach einem der vorhergehenden Ansprüche, bei dem die sekundärseitige Wicklung (L₄,L₅,L₆) mit einem Zwischenkreiskondensator (34) eines Zwischenkreises (32) des Frequenzumrichters (26,26") gekoppelt ist.

5. Frequenzumrichter (26") nach einem der vorhergehenden Ansprüche, bei dem die sekundärseitige Wicklung (L₄,L₅,L₆) mit einem Spannungswandler (48) gekoppelt ist.

6. Frequenzumrichter, der zum Betreiben einer elektrischen Maschine (16) an einem Wechselspannungs-Versorgungsnetz (14) ausgelegt ist und bei dem eine Netzanschlusseinrichtung (A₁,A₂,A₃) über eine Drosselspule (L₁',L₂',L₃') mit einem Einspeise-Gleichrichter (28) gekoppelt ist, wobei ein erster Anschluss der Drosselspule (L₁',L₂',L₃') mit der Netzanschlusseinrichtung (A₁,A₂,A₃) und ein zweiter Anschluss der Drosselspule (L₁',L₂',L₃') mit dem Einspeise-Gleichrichter (28) verschaltet ist, wobei die Drosselspule durch eine primärseitige Wicklung eines Transformators bereitgestellt ist, so dass die Drosselspule transformatorisch mit einer sekundärseitigen Wicklung des Transformators gekoppelt ist, die mit einem Widerstandselement und einem Schaltelement verschaltet ist, so dass ein Strom durch die sekundärseitige Wicklung und das Widerstandelement mittels des Schaltelements wahlweise blockierbar ist, **dadurch gekennzeichnet, dass** in einem Zwischenkreis (32) ein Anschluss (36) eines Zwischenkreiskondensators (34) über einen Schalter (S₁) mit einem Gleichspannungs-Ausgang (ZK+) des Einspeise-Gleichrichters (28) verschaltet ist, und
dass der Frequenzumrichter (26, 26',26'') eingerichtet ist, bei Erkennen der Unterbrechung des Stromes durch den Schalter (S₁) die in der Drosselspule (L₁', L₂', L₃') gespeicherte Energie über die sekundärseitige Wicklung (L₄, L₅, L₆) abzuführen.

7. Frequenzumrichter (26,26',26") nach einem der vorhergehenden Ansprüche, bei dem die Netzanschlusseinrichtung (A₁, A₂,A₃) mehrphasig ist und zumindest zwei der Phasen über jeweils eine Drosselspule (L₁',L₂',L₃') mit dem Einspeise-Gleichrichter (28) gekoppelt sind.

8. Frequenzumrichter (26) nach Anspruch 7, bei dem zumindest zwei der Drosselspulen (L₁',L₂',L₃') in einem gemeinsamen Transformator (44) angeordnet sind.

9. Frequenzumrichter (26) nach Anspruch 8, bei dem zumindest zwei der Drosselspulen (L₁',L₂',L₃') in einem mehrschenkligen Transformator (44) angeordnet sind.

10. Frequenzumrichter (26,26',26") nach einem der vorhergehenden Ansprüche, bei dem in dem Zwischenkreis (32) an einem Gleichspannungs-Ausgang (ZK+, ZK-) des Einspeise-Gleichrichters (28) durch zumindest einen Kommutierungskondensator (38) eine Kommutierungskapazität für den Einspeise-Gleichrichter (28) bereitgestellt ist.

11. Verfahren zum Betreiben eines Frequenzumrichters (26, 26',26") gemäß einem der vorhergehenden Ansprüche, umfassend die Schritte:
- Betreiben des Einspeise-Gleichrichters (28) mit einem Strom aus dem Versorgungsnetz (14);
- falls eine Unterbrechung des Stromes erkannt wird, Abführen einer in der Drosselspule (L₁',L₂',L₃') gespeicherten Energie über die sekundärseitige Wicklung (L₄,L₅,L₆).

12. Verfahren nach Anspruch 11 zum Betreiben eines Frequenzumrichters (26,26',26") mit einem Schaltelement gemäß Anspruch 2 oder gemäß Anspruch 6, bei dem das Schaltelement (S₂) während des Betreibens des Einspeise-Gleichrichters (28) geöffnet ist und das Schaltelement (S₂) bei Erkennen der Unterbrechung des Stromes zum Abführen der Energie geschlossen wird.

13. Verfahren nach Anspruch 11 oder 12 zum Betreiben eines Frequenzumrichters (26,26") gemäß Anspruch 4, bei dem die abgeführte Energie dem Zwischenkreiskondensator (34) zugeführt wird.

14. Verfahren nach einem der Ansprüche 11 bis 13, bei dem eine Stromstärke eines durch den Frequenzumrichter (26,26', 26") fließenden Stromes überwacht wird und, falls die Stromstärke größer als ein vorbestimmter Schwellenwert ist, der Schalter (S₁) in dem Zwischenkreis (32) geöffnet wird.

## Claims

1. Frequency inverter (26, 26', 26"), which is designed for operating an electrical machine (16) on an alternating voltage supply network (14) and with which a mains connection device (*A*₁, *A*₂, *A*₃) is coupled via a throttle coil (*L*₁*'*,*L*₂*'*,*L*₃*'*) to a feed rectifier (28), wherein a first terminal of the throttle coil (*L*₁*'*,*L*₂*'*,*L*₃*'*) and a second terminal of the throttle coil (*L*₁*'*,*L*₂*'*,*L*₃*'*) are interconnected with the mains connection device (*A*₁, *A*₂, *A*₃) and with the feed rectifier (28) respectively, wherein the throttle coil (*L*₁',*L*₂',*L*₃') is provided by a primary-side winding (*L*₁*'*,*L*₂*'*,*L*₃*'*) of a transformer (44), so that the throttle coil (*L*₁*'*,*L*₂*'*,*L*₃*'*) is coupled in the manner of a transformer to a secondary-side winding (*L*₄,*L*₅,*L*₆) of the transformer (44), which is interconnected with a further rectifier (40), **characterised in that** in an intermediate circuit (32) a terminal (36) of an intermediate circuit capacitor (34) is interconnected via a switch (*S*₁) with a direct voltage output (ZK+) of the feed rectifier (28), and
that the frequency inverter (26, 26', 26") is designed to discharge the energy stored in the throttle coil (*L*₁',*L*₂',*L*₃') via the secondary-side winding (*L*₄, *L*₅,*L*₆) when the interruption in the current through the switch (*S*₁) is detected.

2. Frequency inverter (26, 26', 26") according to claim 1, in which a current through the secondary-side winding (*L*₄,*L*₅,*L*₆) can optionally be blocked by means of a switching element (*S*₂).

3. Frequency inverter (26') according to claim 1 or 2, in which a current flowing through the secondary-side winding (*L*₄,*L*₅,*L*₆) can be guided through a resistance element (*R*₁).

4. Frequency inverter (26, 26") according to one of the preceding claims, in which the secondary-side winding (*L*₄,*L*₅,*L*₆) is coupled to an intermediate circuit capacitor (34) of an intermediate circuit (32) of the frequency inverter (26, 26").

5. Frequency inverter (26") according to one of the preceding claims, in which the secondary-side winding (*L*₄,*L*₅,*L*₆) is coupled to a voltage transformer (48).

6. Frequency inverter which is designed for operating an electrical machine (16) on an alternating voltage supply network (14) and in which a mains connection device (*A*₁, *A₂*, *A*₃) is coupled via a throttle coil (*L*_{1,}*' L*₂', *L*₃') to a feed rectifier (28), wherein a first terminal of the throttle coil (*L*₁*'*,*L*₂*'*,*L*₃*'*) and a second terminal of the throttle coil (*L*₁*'*,*L*₂*'*,*L*₃*'*) are interconnected with the mains connection device (*A*₁, *A*₂, *A*₃) and with the feed rectifier (28) respectively, wherein the throttle coil is provided by a primary-side winding of a transformer, so that the throttle coil is coupled in the manner of a transformer to a secondary-side winding of the transformer, which is interconnected with a resistance element and a switching element so that a current through the secondary-side winding and the resistance element can optionally be blocked by means of the switching element, **characterised in that** in an intermediate circuit (32) a terminal (36) of an intermediate circuit capacitor (34) is interconnected via a switch (*S*₁) with a direct voltage output (ZK+) of the feed rectifier (28), and
that the frequency inverter (26, 26', 26") is designed to discharge the energy stored in the throttle coil (*L*₁*'*,*L*₂',*L*₃') via the secondary-side winding (*L*₄,*L*₅,*L*₆) when the interruption in the current through the switch (*S*₁) is detected.

7. Frequency inverter (26, 26', 26") according to one of the preceding claims, in which the mains connection device (*A*₁, *A*₂, *A*₃) is multi-phase and at least two of the phases are coupled by way of a throttle coil (*L*₁*'*,*L*₂*'*,*L*₃*'*) with the feed rectifier (28) in each instance.

8. Frequency inverter (26) according to claim 7, in which at least two of the throttle coils (*L*₁*'*,*L*₂*'*,*L*₃*'*) are arranged in a shared transformer (44).

9. Frequency inverter (26) according to claim 8, in which at least two of the throttle coils (*L*₁*'*,*L*₂*'*,*L*₃*'*) are arranged in a multi-limb transformer (44).

10. Frequency inverter (26, 26', 26") according to one of the preceding claims, in which in the intermediate circuit (32) a commutation capacitance is provided for the feed rectifier (28) at a direct voltage output (ZK+, ZK-) of the feed rectifier (28) by at least one commutation capacitor (38).

11. Method for operating a frequency inverter (26, 26', 26") according to one of the preceding claims, comprising the steps:
- operating the feed rectifier (28) with a current from the supply network (14);
- if an interruption in the current is detected, discharging energy stored in the throttle coil (*L*₁*'*,*L*₂*'*,*L*₃*'*) via the secondary-side winding (*L*₄,*L*₅,*L*₆).

12. Method according to claim 11 for operating a frequency inverter (26, 26', 26") with a switching element according to claim 2 or according to claim 6, in which the switching element (*S*₂) is opened during operation of the feed rectifier (28) and the switching element (*S*₂) is closed when the interruption in the current is detected, in order to discharge the energy.

13. Method according to claim 11 or 12 for operating a frequency inverter (26, 26") according to claim 4, in which the discharged energy is fed to the intermediate circuit capacitor (34) .

14. Method according to one of claims 11 to 13, in which a current intensity of a current flowing through the frequency inverter (26, 26', 26") is monitored and if the current intensity is greater than a predetermined threshold value, the switch (*S*₁) in the intermediate circuit (32) is opened.

## Revendications

1. Convertisseur (26, 26', 26") de fréquence, qui est conçu pour faire fonctionner une machine (16) électrique sur un réseau (14) d'alimentation en tension alternative et dans lequel un dispositif (A₁, A₂, A₃) de connexion au réseau est relié à un redresseur (28) d'alimentation, par une bobine (L₁', L₂', L₃') de self, une première borne de la bobine (L₁', L₂', L₃') de self étant reliée au dispositif (A₁, A₂, A₃) de connexion au réseau et une deuxième borne de la bobine (L₁', L₂', L₃') de self au redresseur (28) d'alimentation, la bobine (L₁', L₂', L₃') de self étant procurée par un enroulement (L₁', L₂', L₃') primaire d'un transformateur (44), de manière à relier la bobine (L₁', L₂', L₃') de self en transformateur à un enroulement (L₄, L₅, L₆) secondaire du transformateur (44), qui est relié à un autre redresseur (40), **caractérisé**
**en ce que**, dans un circuit (32) intermédiaire, une borne (36) d'un condensateur (34) de circuit intermédiaire est reliée par un interrupteur (S₁) à une sortie (ZK+) de tension continue du redresseur (28) d'alimentation et
**en ce que** le convertisseur (26, 26', 26") de fréquence est conçu pour, lorsqu'une interruption du courant par l'interrupteur (S₁) est détectée, dissiper, par l'enroulement (L₄, L₅, L₆) secondaire, l'énergie emmagasinée dans la bobine (L₁', L₂', L₃') de self.

2. Convertisseur (26, 26', 26") de fréquence suivant la revendication 1, dans lequel un courant dans l'enroulement (L₄, L₅, L₆) secondaire peut être bloqué, au choix, au moyen d'un élément (S₂) d'interruption.

3. Convertisseur (26') de fréquence suivant la revendication 1 ou 2, dans lequel un courant, passant dans l'enroulement (L₄, L₅, L₆) secondaire, peut passer dans un élément (R₁) résistant.

4. Convertisseur (26, 26") de fréquence suivant l'une des revendications précédentes, dans lequel l'enroulement (L₄, L₅, L₆) secondaire est relié à un condensateur (34) d'un circuit (32) intermédiaire du convertisseur (26, 26") de fréquence.

5. Convertisseur (26") suivant l'une des revendications précédentes, dans lequel l'enroulement (L₄, L₅, L₆) secondaire est relié à un transformateur (48) de tension.

6. Convertisseur de fréquence, qui est conçu pour faire fonctionner une machine (16) électrique sur un réseau (14) d'alimentation en tension alternative et dans lequel un dispositif (A₁, A₂, A₃) de connexion au réseau est relié à un redresseur (28) d'alimentation, par une bobine (L₁', L₂', L₃') de self, une première borne de la bobine (L₁', L₂', L₃') de self étant reliée au dispositif (A₁, A₂, A₃) de connexion au réseau et une deuxième borne de la bobine (L₁', L₂', L₃') de self au redresseur (28) d'alimentation, dans lequel la bobine de self est procurée par un enroulement primaire d'un transformateur, de manière à ce que la bobine de self soit reliée en transformateur à un enroulement secondaire du transformateur, qui est relié à un élément résistant et à un élément d'interruption, de manière à pouvoir bloquer, au choix, un courant passant dans l'enroulement secondaire et dans l'élément résistant au moyen de l'élément d'interruption, **caractérisé en ce que**, dans un circuit (32) intermédiaire, une borne (36) d'un condensateur (34) de circuit intermédiaire est reliée par un interrupteur (S₁) à une sortie (ZK+) de tension continue du redresseur (28) d'alimentation et
**en ce que** le convertisseur (26, 26', 26") de fréquence est conçu pour, lorsqu'une interruption du courant par l'interrupteur (S₁) est détectée, dissiper, par l'enroulement (L₄, L₅, L₆) secondaire, l'énergie emmagasinée dans la bobine (L₁', L₂', L₃') de self.

7. Convertisseur (26, 26', 26") de fréquence suivant l'une des revendications précédentes, dans lequel le dispositif (A₁, A₂, A₃) de connexion au réseau est polyphasé et au moins deux des phases sont reliées au redresseur (28) d'alimentation par respectivement une bobine (L₁', L₂', L₃') de self.

8. Convertisseur (26) de fréquence suivant la revendication 7, dans lequel au moins deux des bobines (L₁', L₂', L₃') de self sont montées dans un transformateur (44) commun.

9. Convertisseur (26) suivant la revendication 8, dans lequel au moins deux des bobines (L₁', L₂', L₃') de self sont montées dans un transformateur (44) à plusieurs branches.

10. Convertisseur (26, 26', 26") de fréquence suivant l'une des revendications précédentes, dans lequel, dans le circuit (32) intermédiaire, sur une sortie (ZK+, ZK-) de tension continue du redresseur (28) d'alimentation, une capacité de commutation du redresseur (28) d'alimentation est procurée par au moins un condensateur (38) de commutation.

11. Procédé pour faire fonctionner un convertisseur (26, 26', 26") suivant l'une des revendications précédentes, comprenant les stades :
- on fait fonctionner le redresseur (28) d'alimentation avec un courant provenant du réseau (14) d'alimentation;
- si l'on détecte une interruption du courant, on dissipe, par l'enroulement (L₄, L₅, L₆) secondaire, une énergie emmagasinée dans la bobine (L₁', L₂', L₃') de self.

12. Procédé suivant la revendication 11 pour faire fonctionner un convertisseur (26, 26', 26") de fréquence, ayant un élément d'interruption suivant la revendication 2 ou suivant la revendication 6, dans lequel on ouvre l'élément (S₂) d'interruption pendant le fonctionnement du redresseur (28) d'alimentation et on ferme l'élément (S₂) d'interruption à la détection de l'interruption du courant pour dissiper l'énergie.

13. Procédé suivant la revendication 11 ou 12 pour faire fonctionner un convertisseur (26, 26") de fréquence suivant la revendication 4, dans lequel on envoie l'énergie dissipée au condensateur (34) de circuit intermédiaire.

14. Procédé suivant l'une des revendications 11 à 13, dans lequel on contrôle une intensité d'un courant passant dans le convertisseur (26, 26', 26") de fréquence et, si l'intensité du courant est plus grande qu'une valeur de seuil déterminée à l'avance, on ouvre l'interrupteur (S₁) du circuit (32) intermédiaire.
